## Europäisches Patentamt

## European Patent Office

## Office européen des brevets

(19)

(11) Publication number: **0 017 340**
**B1**

(12) **EUROPEAN PATENT SPECIFICATION**

(45) Date of publication of patent specification: **02.11.83**

(51) Int. Cl.³: **G 02 B 27/10, G 02 B 23/12**

(21) Application number: **80300633.7**

(22) Date of filing: **03.03.80**

(54) **Day and night observation apparatus.**

(30) Priority: **02.03.79 US 16991**

(43) Date of publication of application:
**15.10.80 Bulletin 80/21**

(45) Publication of the grant of the patent:
**02.11.83 Bulletin 83/44**

(84) Designated Contracting States:
**CH DE FR IT NL**

(56) References cited:
**DE - A - 2 007 758**
**DE - A - 2 215 189**
**DE - A - 2 623 399**
**DE - B - 1 132 742**
**DE - B - 1 186 652**
**DE - B - 1 797 610**
**GB - A - 1 513 813**
**US - A - 2 374 475**
**US - A - 3 836 232**

(73) Proprietor: **SPERRY CORPORATION**
**1290, Avenue of the Americas**
**New York, N.Y. 10019 (US)**

(72) Inventor: **Roth, Irving**
**14 Gordon Drive**
**Williston Park New York 11596 (US)**
Inventor: **Davidson, Ralph**
**24 Melissa Lane**
**Old Bethpage New York 11804 (US)**

(74) Representative: **Singleton, Jeffrey**
**Eric Potter & Clarkson 5 Market Way Broad Street**
**Reading Berkshire, RG1 2BN (GB)**

Courier Press, Leamington Spa, England.

## Day and night observation apparatus

The present invention relates to an apparatus for viewing targets during the day and at night.

It is well known in the art that an optical telescope can make objects at a distance appear close at hand. This capability, however, exists only during the daylight hours when the ambient light is above a known threshold. Situations exist, however, which require the detection and observation of targets at night when the ambient light is below the threshold for sighting objects with conventional optical techniques. In these situations, infrared (IR) optometry may be utilised to accomplish the desired object detection. Combining the optical telescope and the IR optometer (which also has daylight capability) day-night detection and observation may be realised. In the prior art, this day-night capability is provided with a multiplicity of equipment comprising conventional telescopes for daylight observations supplemented by IR equipment for night observations. In many applications, in addition to direct observations, it is required that the telescopically viewed object and the representation derived from the IR reception from the object be made available at remote locations. This is generally accomplished by coupling a TV camera to the image lens of the telescope and one to the screen on which the IR picture appears, thus requiring a telescope for direct viewing, a telescope and TV cama for remote viewing, an IR screen for direct viewing, and an IR screen and TV camera for remote viewing.

It is an object of the present invention to provide, in a single instrument, a first capability which permits a direct observation of the telescopic image and the simultaneous coupling of a TV camera to an IR derived image and a second capability which permits the simultaneous direct viewing of the telescopic and IR images while coupling these images to the TV camera.

According to the present invention there is provided an apparatus for viewing targets during the day and at night characterised in that it comprises a telescope, an infra-red monitor having a display surface, and a beam splitting means positioned in the optical paths of images generated by the telescope and the display surface for directing the images both to a television camera for transmission to remote locations and to an eyepiece for local observation, the beam splitting means being controllably operable to reflect and transmit light incident thereon within ranges that include substantially 0% reflection and substantially 100% transmission.

A preferred image observation apparatus constructed according to the principles of the present invention includes a beam splitter switchably insertable in said optical paths simultaneously to direct, in conjunction with appropriately positioned mirrors, images from the image lens of the telescope and the display surface to the TV camera and the image lens of the eyepiece. When the beam splitter is removed from the optical paths, the image on the display surface is only directed to the TV camera and the image at the image lens of the telescope is only directed to the image lens of the eyepiece.

Apparatus for viewing a multiplicity of images in accordance with the present invention will now be described in greater detail, by way of example, with reference to the accompanying drawings, in which:—

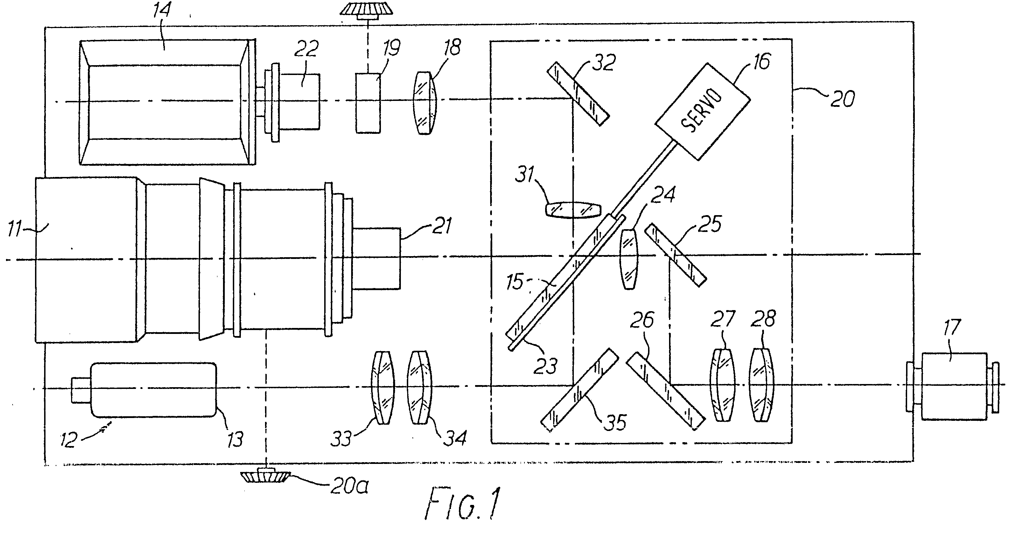

Figure 1 is a schematic diagram of one embodiment of the invention, and

Figure 2 is a schematic diagram of a second embodiment.

Referring to the drawing, the principal components of the image observation apparatus 10 include an optical telescope 11 with image lens 21, an IR monitor 12 with a display surface 13, a TV camera 14 with an image lens 22, a beam-directing system 20 including a variable reflectivity beam splitter 15, and a servo 16 for positioning the beam splitter for the desired reflectivity, and an eyepiece 17. The variable-reflectivity beam splitter 15 is constructed to provide reflections between substantially 0% and 50% and transmissions of between substantially 100% and 50%, respectively. This variable reflectivity-transmissivity characteristic of the beam splitter 15 provides the means with which an operator may select to observe only the image appearing at the image lens 21 of the optical telescope 11 and simultaneously couple the IR display on the display surface 13 to the objective lens 22 of the TV camera 14, or to simultaneously observe the IR display and the optical image through the eyepiece 17 whilst simultaneously coupling the IR display and the optical image to the objective lens 22 of the TV camera 14.

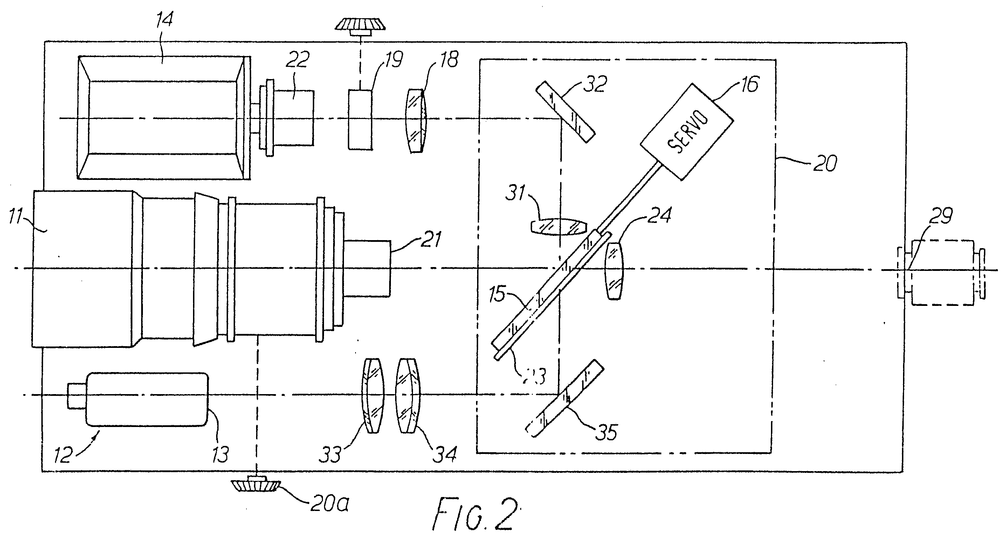

Assume the beam splitter 15, in the beam-directing system 20, has been positioned on track 23 by the servo 16 to a desired reflection-transmission position. Light from the image lens 21, the intensity of which may be varied by an internal iris adjustable through external control 20a, incident on the beam splitter 15 will be partially transmitted therethrough and will be incident on a focussing lens 24. The lens 24 focusses the transmitted light onto a mirror 25 from which it is reflected to a mirror 26 and therefrom to a collimating lens 27. A collimated beam from the lens 27 passes through a lens 28 and is focussed thereby onto the eyepiece 17. It will be apparent to those skilled in the art that mirrors 25 and 26 and lenses 27 and 28 may be included so as conveniently locate the eyepiece 17. These components may, however be omitted and the eyepiece 17 relocated in a position 29 for alignment with the lens 24 as shown in Figure 2. A portion of the light incident on the beam splitter 15 from the lens 21 is reflected therefrom to a lens 31 which focusses the reflected beam on a mirror 32 which is reflected to the objective lens 22 via a collimating lens 18 and an adjustable iris 19 which may be utilised to maintain the light intensity incident on the objective lens 22 within the dynamic range of the TV camera 14.

With the beam splitter 15 positioned for the desired reflection-transmission characteristic, light from the IR display 13 is collimated by a lens 33, coupled therefrom to a lens 34, focussed thereby onto a mirror 35, and reflected therefrom to be incident on beam splitter 15. The light incident on beam splitter 15 is partially transmitted therethrough and is focussed by the lens 31 to the mirror 32 from which it may be directed, via the collimating lens 18 and adjustable iris 19, to the image lens 22 of TV camera 14. Light incident on the beam splitter 15 from the IR display 13 via lenses 33, 34, and mirror 35 is partially reflected thereby to be incident on the lens 24 from which the light is focussed onto the mirror 25 and reflected therefrom to the eyepiece 17 via the mirror 26 and lenses 27 and 28. Thus, the beam splitter 15 causes the image of the IR display 13 and the image at the imaging lens 21 simultaneously to appear at both the eyepiece 17 and the objective lens 22 of the TV camera 14 wherein the internal adjustable iris may be operated to optimize the relative intensities of the IR and lens images. The variation of the reflectivity-transmissivity of the beam splitter 15 by selective positioning along the track 23 with the servo 16 permits the observer to select a desirable contrast at the eyepiece 17 between the telescopic and the IR images.

When the beam splitter 15 is positioned such that the reflectivity and transmissivity are substantially 0 and 100% respectively, (i.e. the beam splitter 15 provides substantially no reflection and all light incident thereto is substantially transmitted therethrough), the image at the IR display 13 is coupled to the objective lens 22 of the TV camera 14 via lenses 33, 34, mirror 35, lens 31, and mirror 32 with substantially no IR image coupling to the eyepiece 17. Furthermore, the image at the image lens 21 of the telescope 11 is transmitted to the eyepiece 17 via lens 24, mirrors 25 and 26, and lenses 27 and 28 with substantially no telescopic image coupling to the objective lens 22 of the TV camera 14. Thus, when an observer is only desirous of monitoring an external scene by a telescope 11, he may position the beam splitter 15 to provide substantially zero reflectivity and receive an unencumbered image from image lens 21 at the eyepiece 17.

**Claims**

1. Apparatus for viewing targets during the day and at night characterised in that it comprises a telescope (11), an infra-red monitor (12) having a display surface (13), and beam splitting means (15) positioned in the optical paths of images generated by the telescope (11) and the display surface (13) for directing the images both to a television camera (14) for transmission to remote locations and to an eyepiece (17) for local observation, the beam splitting means (15) being controllably operable to reflect and transmit light incident thereon within ranges that include substantially 0% reflection and substantially 100% transmission.

2. Apparatus for viewing targets during the day and at night in accordance with claim 1, characterised in that the beam splitting means (15) is controllable to obtain reflections between substantially 0% and 50% of the incident light and concomitant transmissions between substantially 100% and 50%.

3. Apparatus for viewing targets during the day and at night in accordance with claim 1 or 2, characterised in that it includes first means (32) for deflecting light coming from the beam splitting means to the first television camera (14), and the second means (25, 26) for deflecting the beam transmitted through the beam splitting means (15) to the eyepiece (17).

4. Apparatus for viewing targets during the day and at night in accordance with claim 3, characterised in that it further includes third means (35) positioned in the optical path of the image on the display surface (13) for deflecting light therefrom to the beam splitting means (15).

5. Apparatus for viewing targets during the day and at night in accordance with claim 3 or 4, characterised in that it further includes means (18) for collimating light deflected from the first deflecting means (32), and means (19) positioned between the collimating means (18) and the television camera (14) for selectably varying the intensity of collimated light beams incident to the television camera (14).

6. An apparatus in accordance with any of the preceding claims, characterised in that the telescope (11) includes means (20a) for varying the intensity of an image projected therefrom.

**Revendications**

1. Appareil pour observer des cibles pendant le jour et la nuit, caractérisé en ce qu'il comprend un télescope (11), un moniteur à infrarouge (12) comportant une surface d'affichage 13 et un moyen de division de faisceau (15) positionné dans les trajets optiques des images engendrées par le télescope (11) et la surface d'affichage (13) pour diriger les deux images vers une caméra de télévision (14) pour une transmission en des endroits éloignés et vers un oculaire (17) pour une observation locale, le moyen de division de faisceau (15) pouvant être commandé pour réfléchir et transmettre la lumière incidente dans des gammes qui comprennent une réflexion essentiellement de 0% et une transmission essentiellement de 100%.

2. Appareil pour observer des cibles pendant le jour et la nuit selon la revendication 1, caractérisé en ce que le moyen de division de faisceau (15) peut être commandé pour obtenir des réflexions de la lumière incidente entre essentiellement 0% et 50% et des transmissions concomitantes comprises entre essentiellement 100% et 50%.

3. Appareil pour observer des cibles pendant le jour et la nuit selon l'une des revendications 1 ou 2, caractérisé en ce qu'il comprend un premier moyen (32) pour dévier la lumière provenant du moyen de division de faisceau vers la première caméra de télévision (14) et un second moyen (25, 26) pour dévier les faisceaux transmis au travers du moyen de division de faisceau (15) vers l'oculaire (17).

4. Appareil pour observer des cibles pendant le jour et la nuit selon la revendication 3, caractérisé en ce qu'il comprend en outre un troisième moyen (35) positionné dans le trajet optique de la lumière apparaissant sur la surface d'affichage (13) pour dévier la lumière provenant de cette surface vers le moyen de division de faisceau (15).

5. Appareil pour observer des cibles pendant le jour et la nuit selon l'une des revendications 3 ou 4, caractérisé en ce qu'il comprend en outre un moyen (18) pour collimater la lumière déviée par le premier moyen de déviation (32) et un moyen (19) positionné entre le moyen de collimation (18) et la caméra de télévision (14) pour faire varier sélectivement l'intensité des faisceaux de lumière collimitée arrivant sur la caméra de télévision (14).

6. Appareil selon l'une quelconque des revendications 1 à 5, caractérisé en ce que le télescope (11) comprend un moyen (20a) pour faire varier l'intensité d'une image qu'il projette.

**Patentansprüche**

1. Vorrichtung zur Betrachtung von Zielen bei Tag und bei Nacht, dadurch gekennzeichnet, daß die Vorrichtung ein Fernrohr (11), einen infrarotmonitor (12) mit einer Bildanzeigeoberfläche (13) sowie Strahlteilereinrichtungen (15) aufweist, die in den optischen Bahnen der von dem Fernrohr (11) und der Bildanzeigeoberfläche (13) erzeugten Bilder angeordnet sind, um die Bilder sowohl zu einer Fernsehkamera (14) zur Übertragung an entfernte Stellen als auch an ein Okular (17) zur örtlichen Betrachtung zu leiten, und daß die Strahlteilereinrichtungen (15) in steuerbarer Weise derart betätigbar sind, daß sie auf die Strahlteilereinrichtungen auftreffendes Licht in Bereichen reflektieren und übertragen, die eine Reflexion von im wesentlichen 0% und eine Lichtübertragung von im wesentlichen 100% einschließen.

2. Vorrichtung zur Betrachtung von Zielen bei Tag und bei Nacht gemäß Anspruch 1, dadurch gekennzeichnet, daß die Strahlteilereinrichtungen (15) so steuerbar sind, daß sich Reflexionen von im wesentlichen 0% bis 50% des einfallenden Lichts und gleichzeitige Lichtübertragungen zwischen im wesentlichen 100% und 50% ergeben.

3. Vorrichtung zur Betrachtung von Zielen bei Tag und bei Nacht gemäß Anspruch 1 oder 2, dadurch gekennzeichnet, daß erste Einrichtungen (32) zur Ablenkung von von den Strahlteilereinrichtungen kommendem Licht zur der ersten Fernsehkamera (14) und zweite Einrichtungen (25, 26) zur Ablenkung des durch die Strahlteilereinrichtungen (15) übertragenen Strahls zum Okkular (17) vorgesehen sind.

4. Vorrichtung zur Betrachtung von Zielen bei Tag und bei Nacht gemäß Anspruch 3, dadurch gekennzeichnet, daß weiterhin dritte Einrichtungen (35) vorgesehen sind, die auf der optischen Bahn des Bildes auf der Bildanzeigeoberfläche (13) angeordnet sind und Licht von dieser zu den Strahlteilereinrichtungen (15) umlenken.

5. Vorrichtung zur Betrachtung von Zielen bei Tag und bei Nacht nach Anspruch 3 oder 4, dadurch gekennzeichnet, daß weiterhin Einrichtungen (18) zu Kollimation von von den ersten Ablenkeinrichtungen (32) abgelenktem Licht und zwischen den Kollimationseinrichtungen (18) und der Fernsehkamera (14) angeordnete Einrichtungen (19) zur selektiven Änderung der Intensität der auf die Fernsehkamera (14) auftreffenden kollimierten Lichtstrahlen vorgesehen sind.

6. Vorrichtung nach einem der vorhergehenden Ansprüche, dadurch gekennzeichnet, daß das Fernrohr (11) Einrichtungen (20a) zur Änderung der Intensität eines von dem Fernrohr projizierten Bildes einschließt.

FIG.1

0017 340

FIG. 2